# EUROPEAN PATENT APPLICATION

(11) **EP 4 711 053 A1**
(43) Date of publication of application: **18.03.2026**
(21) Application number: 23922554.3
(22) Date of filing: 27.12.2023
(51) Int. Cl.: B09B 3/32, C08L 95/00, E01C 7/00

(54) **METHOD FOR OBTAINING AN ASPHALT MIX WITH THE ADDITION OF PELLETS OF A MIXTURE OF MUNICIPAL AND/OR INDUSTRIAL WASTE AND/OR A MIXTURE OF MATERIALS FROM THE MECHANICAL TREATMENT OF WASTE NOT CONTAINING HAZARDOUS SUBSTANCES**

(30) Priority: 14.02.2023 ES 202330113
(71) Applicant: Quimica de los Pavimentos S.A, 28991 Torrejón de la Calzada (ES); Peña Sese, Carlos, 28991 Torrejón de la Calzada (ES); Martín Jimienez, Víctor Manuel, 28991 Torrejón de la Calzada (ES)
(72) Inventor: INTERLANDO, Emanuele, 28991 Torrejon de la Calzada (ES); PEÑA SESE, Carlos, 28991 Torrejón de la Calzada (ES); MARTÍN JIMIENEZ, Víctor Manuel, 28991 Torrejón de la Calzada (ES)
(74) Representative: Lahidalga de Careaga, Jose Luis
(86) International application number: PCT/ES2023/070789
(87) International publication number: WO 2024/170806

(57) **Abstract**

Procedure for obtaining hot mix asphalt additivated with pellets made of urban and/or industrial waste compounds and/or materials compound from the mechanical treatment of waste that does not contain hazardous substances [defined according to the European Waste List (EWL) and European Waste Codes (EWC) with numbers 200301, 200199, 200399, 191212], that comprise the phases of a first extraction system of metallic materials (ferrous and non-ferrous), a primary crushing, a second extraction system of metallic materials (ferrous and non-ferrous), a pulverizing of bitumen emulsion and chemical additives in proportions between 1% and 10% of the waste weight, a secondary crushing or refining, and a pelletizing process with the presence of the bitumen emulsion and chemicals and a moisture content of less than 18% where the percentages of pellet incorporation into Hot Mix Asphalt can vary from 0.1% to 10% by weight of the Hot Mix Asphalt.

## Description

The object of the invention, as expressed in the statement of this descriptive report, refers to a process for obtaining hot mix asphalt additivated with pellets made of urban and/or industrial waste compounds and/or materials compound from the mechanical treatment of waste that does not contain hazardous substances.

In this case, the compound of urban and industrial waste refers to municipal and industrial waste defined according to the European Waste List (EWL) and European Waste Codes (EWC) with number 200301, 200199, 200399, while materials defined as a compound of materials from the mechanical treatment of waste that do not contain hazardous substances refer specifically to those defined under EWC code 191212.

The novelty of this process is the production of Hot Mix Asphalt (HMA)containing pellets made up of a compound of waste that, due to its nature and condition, could not otherwise be part of a circular economy, as it cannot be recycled or reused. Ultimately, at present, the only ways to dispose of this waste are incineration or landfill, thus ending its life cycle.

The Hot Mix Asphalt produced with this system are completely similar to the conventional HMA used for paving all types of roads (urban, interurban, car parks, motorways, highways, airports, among others) and are manufactured, handled and laid at the same temperatures, under the same conditions and with the same production plants, the same machinery and the same equipment commonly used in asphalt works.

The introduction of the type of waste pellet defined in this document does not alter the mechanical and durability characteristics of the asphalt mixes.

### TECHNICAL FIELD

The field of the invention corresponds to the asphalt manufacturing industry, an auxiliary industry of construction.

The procedure for obtaining a Hot Mix Asphalt with urban/industrial waste pellets compounds implies a double benefit:
1. The substantial reduction of waste that could not become part of a circular economy (it cannot be recycled or reused)
2. the maintaining or possible improvement of the mechanical characteristics and durability of the Hot Mix Asphalt.

This is an important contribution to the sustainable development of the industry.

Taking into account that the incorporation of 0.5% of waste pellets in the weight (w/w) of asphalt mixt, it would mean 5 kilos per tonne of asphalt. Production in this type of industry involves an average of 700 tonnes per day per each Hot Mix Asphalt plant, which would mean recycling 3,500 kilos of waste, thus reducing the work involved in extracting, transporting and processing new raw materials, leading to a significant reduction in the energy required to carry out these processes.

### BACKGROUND OF THE INVENTION

The economic system in which developed countries are immersed, based on the manufacture, provision and consumption of all kinds of products and services, in which activity is governed by criteria of economic growth, causes serious environmental problems both locally and globally.

The most important challenge we face in the 21st century is to maintain and, if possible, improve the health of the planet and its inhabitants. We do not realise that we live in a finite world, with physical limits that do not allow for unlimited growth. We have a limited availability of resources, as well as a limited capacity for natural systems to absorb the waste and other forms of pollution we generate. We must not allow the expression 'sustainable development' to be an empty slogan.

Waste management is integrated into the life cycle of all materials, therefore, through appropriate environmental management, waste must be part of the cycle and not the end point. For example, different types of waste can be used as raw materials by reincorporating them into construction processes.

The waste generated by human activity has been increasing throughout history. In recent times, with the general increase in resource consumption, this trend is accelerating.

The problem with this generation arises because, traditionally, waste has been considered worthless and something that must be disposed of in the least costly way possible. This has led to most of the world's waste ending up in landfills.

Landfills are currently one of the main challenges facing cities. They are one of the causes of climate change, as they can cause fires or explosions, pollute water and soil, alter wildlife and degrade the environment, among other things. It is essential to find solutions that reduce the amount of waste that ends up in landfills.

In Spain alone, after years of raising awareness about waste separation and treatment, 57% of our waste still ends up in landfills irretrievably.

The inventors are aware of the existence of some previous additives to hot mix asphalt to modify their properties.

Among these we can mention the following:
Patent FR 19720009118, application date 10.03.1972, for 'Procedure for preparing a new asphalt by adding a short-chain amine'.

Technically, this is a different additive from the one recommended in the invention and, therefore, does not have the same characteristics and qualities as the incorporation of pellets of municipal and/or industrial waste mixtures, and/or mixtures of materials from the mechanical treatment of waste that does not contain hazardous substances (defined according to the European List of Waste (ELW) with European Waste Codes (EWC) codes 200301, 200199, 200399, 191212). We do not consider this to be a very relevant precedent.

Patent WO2012010150 from SasolWax GmbH for "Method for producing agglomerates containing rubber and wax, agglomerate produced according to said method, and use of said agglomerate in asphalts or bituminous compounds.

In this particular case, the additives are rubber and wax compounds, which differ substantially from the additives proposed in the recommended patent.

We do not consider this to be a very relevant precedent either.

Patent ES201930334, application date 12.04.2019, entitled 'New asphalt mixture composition' and essentially involves an asphalt mixture composition based on recycled asphalt pavement (RAP) comprising a recycled polymer in an amount between 0.5% and 2% by weight relative to the weight of the recycled asphalt pavement (RAP) included in the mixture.

The invention also covers the process for obtaining said asphalt mixes from recycled asphalt pavement (RAP).

In this case, it also involves the addition of recycled products to the asphalt mixture, but exclusively with additives from recycled asphalt pavement, a product that is very different from urban and/or industrial waste pellets compound, and/or mixtures of materials from the mechanical treatment of waste that do not contain hazardous substances (defined according to the European List of Waste (ELW) with European Waste Codes (EWC) codes 200301, 200199, 200399, 191212).

We do not consider this to be a very relevant precedent either.

The inventors are not aware of any precedent similar to that described in the proposed patent.

### DESCRIPTION OF THE INVENTION

The present invention relates to a process for obtaining hot mix asphalt additivated with pellets made of urban and/or industrial waste compounds and/or materials compound from the mechanical treatment of waste that does not contain hazardous substances, defined according to the European List of Waste (ELW) with European Waste Codes (EWC) numbers 200301, 200199, 200399, 191212, which also implies a double benefit: technical and environmental.

Once the management company has collected the solid urban and industrial waste, the waste it is commonly classified according to its nature. The following categories, among others, can be identified: several types of plastic, paper and cardboard, glass, metal, wood, organic waste. Each of these categories of waste is treated specifically for reuse, recycling or reincorporation into a production process. However, there is a final category of waste that corresponds to "residual" waste, the "undifferentiated" part, which includes a little bit of everything and, as no specific treatment system can be defined for it, is usually taken to landfill or incinerated. In general, these 'remnants' are identified, according to the European Waste Identification System, with the following European Waste Codes (EWC) codes: 200301, 200199, 200399, 191212. This invention refers to these categories of waste.

Then, the waste that this invention refers to, is transferred to a specialized plant for the industrial production of pellets. The waste passes through a first system for the extraction of metallic materials (ferrous and non-ferrous) to remove parts that are not compatible with the process of adding additives to Hot Mix Asphalt.

Powerful magnets from the processing line are used to separate metallic materials, trapping them against the face of the magnet and ensuring that they cannot re-enter the material flow. The strength of the magnetic field means that the continuous flow of material, no matter how fast, will be able to dislodge the ferrous material from where it was initially trapped. Magnetic separation equipment suitable for the procedure will be used. The system generates an electromagnetic field through which the material flows, detecting and rejecting any ferrous or non-ferrous metal hidden within the material. In situations where a magnetic separator cannot remove a non-ferrous contaminant, such as aluminum, a metal detector can detect this metal and remove the contaminated section of material from the larger flow of operations.

Once these materials that are not compatible with the Hot Mix Asphalt (HMA) have been removed from the waste, they will undergo a primary crushing process.

Primary crushing can be defined as a processing method that helps to reduce the size of materials. Crushing plays a very important role in waste utilization. Firstly, it helps to save space and facilitates the transport of waste, and secondly, crushed materials can be easily recycled. The type of crusher to be used depends on the waste to be treated and the pellet production process. The purpose of primary crushing is to reduce and homogenize the size of the incoming material. As its name suggests, it is the first step in the process, so it is fed with untreated materials, such as the urban and industrial solid waste as defined in this invention.

Once the primary crushing is complete, the material is transported by a conveyor belt to the secondary crushing (refining) stage. In this flow, magnets act (as in the previous process) to trap residual metallic materials (ferrous and non-ferrous), acting as a second system for extracting metallic materials. Before entering the refiner (secondary crushing), a bitumen emulsion is sprayed by nozzles while the material transported by the conveyor belt. In this phase, also some special chemical additives could be incorporated to the waste mixture with the scope of assuring better compatibility between waste pellets and HMA. The characteristics and quantity of emulsion and additives applied are controlled and well defined according to the pellet design.

Once the waste has been homogenized by the primary crusher, any metal residues have been removed and the corresponding emulsion and additives have been added, it passes through a second crusher (secondary crushing or refining) to obtain a more refined particle size necessary for the pellet manufacturing process. The particle size of the crushed waste is perfectly defined in the pellet design phase, so the waste is ready to be transformed into pellets.

Palletization is a method of compressing a material into granules (pellets). It is used in a wide variety of industries to process thousands of materials, making them easier to handle. It has many benefits and is a highly customizable process, which is why it has become a staple for many companies.

Pelletizing materials offers many benefits. That is why it has become a very popular method for improving product performance, facilitating handling and transport challenges, and even giving products the desired characteristics. In general, any pelletizing method improves the handling and application of a material.

There are many benefits to a product that has undergone this technique, among which we can highlight the following:
a. Improved product performance: Product performance can be improved in several ways as a result of palletization. Pellets are more likely to deliver specific results than their powder, plate, sheet or other forms, and are much easier to apply with precision.
b. Improved product handling and application: Granulated products are much easier to handle and apply in production processes. Pellets are easier to feed due to improved and more consistent flow.
c. Pellets are less dusty: Some materials can even be pelletized before pouring to reduce dust loss during transport and handling, as well as to prevent the material from being blown away by the wind.
d. Reduced waste: Products often produce excess material waste. Palletization avoids this problem by significantly reducing the amount of waste.
e. Faster product breakdown: Pellets offer faster product breakdown compared to granules created in a roller compactor. This is because roller compaction uses extreme pressure to form granules and create a very dense product. Pellets created through palletization are not as dense, therefore they are strong enough to withstand handling and application.
f. Reduced wear: Wear refers to the breaking of the edges of fine granules and produces excess dust. Pellets produced through granulation offer significantly reduced dust and wear, as they are round, so there are no sharp edges to degrade.
g. Greater formulation capabilities: Palletization is a highly flexible process, allowing for a significant amount of product customization. Additives can be included to improve product formulations, and variables can be adjusted to identify specific parameters of the final product, such as particle size distribution, crush resistance, flowability, and more.

The size of the pellets produced with the waste covered by this invention is perfectly defined to fulfil their function as additives in asphalt mixes.

The pellets produced using the industrial process described above are manufactured with the ultimate aim of introducing them as components of Hot Mix Asphalt (HMA) generally used for paving streets and roads.

To understand how these waste pellets are used in the Hot Mix Asphalt manufacturing process, it is necessary to describe a Hot Mix Asphalt production plant, which we will refer to as an 'asphalt plant'.

The asphalt plant is a set of equipment used to mix aggregates and bitumen to produce a bituminous mix (or Hot Mix Asphalt). In some cases, mineral additives (filler) and/or other types of additives (chemicals, fibers, polymers, etc.) may be required to be added to the mixing process. Hot Mix Asphalt is widely used for paving roads, municipal roads, car parks, airport motorways, among others.

The operating principle of asphalt plants is as follows:
1) Cold aggregates are fed into different hoppers according to particle size.
2) The collection conveyor belt under the hoppers and an inclined conveyor belt transfers them successively to the drying drum.
3) Once dry, the hot materials exit and enter the elevator, which transports them to the screening system.
4) The hot aggregates are separated by multi-layer vibrating screens.
5) They enter temporary storage containers, the number of which varies depending on the plant model.
6) The aggregates are transferred to a mixer according to the dosing weights established during the asphalt mix design phase.
7) At the same time, the bitumen and mineral and/or other additives are also weighed and transferred to the mixer.
8) After mixing for approximately 20 seconds, the final mixture is discharged into a truck or storage silo.

The pellets, obtained according to the industrial process defined in this document, would be automatically incorporated directly into the mixer as an additive and mixed with the aggregates and bitumen. In this process, there is no combustion of the introduced pellets of waste, but rather a completely homogeneous mixture in which these pellets are dispersed and would become part of the overall mix, without altering the characteristics of the mixtures (in some cases, improving some mechanical parameters).

The Hot Mix Asphalt obtained with the addition of the pellets of waste is laid and compacted with standard work equipment and treated like any conventional asphalt mix.

The addition of the waste pellets does not entail any modification to the Hot Mix Asphalt.

The introduction of waste pellets into Hot Mix Asphalt in proportion higher than 2% would need a previous laboratory mix design. It is always advisable to perform some laboratory testing before the use of waste pellets in any Hot Mix Asphalt.

The addition of the compound of urban and industrial waste pellets refers to urban and industrial waste defined according to the European Waste List (EWL) with European Waste Codes (EWC) with number 200301, 200199, 200399, while materials defined as a compound of materials from the mechanical treatment of waste that do not contain hazardous substances refer specifically to those defined under EWC code 191212 into Hot Mix Asphalt would eliminate a huge amount of this type of waste. If we use between 0.5% and 10% of pellets by weight of the Hot Mix Asphalt, we would consume between 5 and 100 kilos of waste per ton of asphalt. Otherwise, this waste would continue the usual process of incineration or end up in a landfill.

### PREFERRED EMBODIMENT OF THE INVENTION

The present invention relates to a method for obtaining Hot Mix Asphalt additivated with pellets made of urban and/or industrial waste compounds and/or materials compound from the mechanical treatment of waste that does not contain hazardous substances. (defined according to the European Waste List (ERS) with European Waste Codes (EWC) 200301, 200199, 200399, 191212.

Once the waste collection activity has been completed by the service company, the waste subject to this invention is transported to a specialized plant for the industrial pellet production process. These pellets are subsequently incorporated into the Hot Mix Asphalt (during the manufacturing process at Asphalt Plants) for the paving of all types of roads (urban, interurban, regional, national, highways, etc.) and also other infrastructure such as parking lots, airports, etc.

In a preferred embodiment, the process consists of the following phases:
a) The waste passes through a first metallic material extraction system (ferrous and non-ferrous) to eliminate the components incompatible with the asphalt mixture additive process.
b) The waste undergoes primary crushing, the objective of which is to reduce and homogenize its size to a dimension between 5 and 10 cm.
c) The waste passes through a second metallic material extraction system (ferrous and non-ferrous) to eliminate the remaining components incompatible with the hot mix asphalt additive process.
d) A bitumen emulsion and others chemical additives is sprayed by nozzles while the material is transported by the conveyor belt. The emulsion and additives proportion is between 1% and 10% of the waste weight (w/w).

This emulsion and additives improve the compatibility between the waste and the asphalt mixes.
e) The waste undergoes a second crushing process, known as refining. This results in a finer particle size material, necessary for the pellet manufacturing process. The particle size will be less than 4 mm, and the material will be very uniform and have a moisture content of less than 18% by weight. All these characteristics make the waste suitable for the pelletizing process:
f) Pelletizing phase. Once the appropriate particle size and moisture content have been achieved, the waste is pelletized using an industrial process.
g) The resulting pellet is incorporated into the Hot Mix Asphalt. The product is incorporated into the Hot Mix Asphalt automatically, by direct introduction into the mixer of the asphalt mixing equipment (Asphalt Plant).

In this process, there is no combustion of waste, but rather a completely homogeneous mixture in which these residues become part of the overall components, without altering the characteristics of the Hot Mixes Asphalt (in some cases, improving some mechanical parameters). Once the pellet comes into contact with the aggregate and hot bitumen, it disintegrates, losing moisture. The presence of bitumen and additives, incorporated into the pellet as an emulsion and chemicals during the production phase, improves compatibility with the aggregate-bitumen matrix, so that the residue constituting the pellet is homogeneously dispersed in the Hot Mix Asphalt.

h) The percentages of pellet incorporation into the mix can vary between n 0.1% to 10% by weight of the Hot Mix Asphalt mixture.

Having sufficiently described the nature of the invention, as well as the manner of its implementation, it should be noted that the aforementioned provisions are subject to detailed modifications as long as they do not alter their fundamental principles, established in the preceding paragraphs and summarized in the following claims.

## Claims

1. Procedure for obtaining Hot Mix Asphalt additivated with pellets made of urban and/or industrial waste compounds and/or materials compound from the mechanical treatment of waste that does not contain hazardous substances. (defined according to the European Waste List (EWL) and European Waste Codes (EWC) with number 200301, 200199, 200399, 191212).

2. Procedure for obtaining Hot Mix Asphalt additivated with pellets made of urban and/or industrial waste compounds and/or materials compound from the mechanical treatment of waste that does not contain hazardous substances defined according to the European Waste List (EWL) and European Waste Codes (EWC) with number 200301, 200199, 200399, 191212, **characterized in that** the production process for manufacturing pellets made of waste, emulsion and additives has the following phases:
1) first extraction system of metallic materials (ferrous and non-ferrous)
2) primary crushing
3) second extraction system of metallic materials (ferrous and non-ferrous)
4) pulverizing of bitumen emulsion and additives in proportions between 1% and 10% of the waste weight
5) secondary crushing or refining
6) pelletizing with the presence of bitumen emulsion and a moisture content of less than 18%

3. Procedure for obtaining Hot Mix Asphalt additivated with pellets made of urban and/or industrial waste compounds and/or materials compound from the mechanical treatment of waste that does not contain hazardous substances [defined according to the European Waste List (EWL) and European Waste Codes (EWC) with number 200301, 200199, 200399, 191212] according to claim 1, **characterized in that** once the pellet comes into contact with the aggregate and hot bitumen, it disintegrates, losing moisture. The presence of bitumen and additives, incorporated into the pellet as an emulsion and chemicals during the production phase, improve compatibility with the aggregate-bitumen matrix, so that the residue constituting the pellet is homogeneously dispersed in the Hot Mix Asphalt.

4. Procedure for obtaining hot mix asphalt additivated with pellets made of urban and/or industrial waste compounds and/or materials compound from the mechanical treatment of waste that does not contain hazardous substances [defined according to the European Waste List (EWL) and European Waste Codes (EWC) with number200301, 200199, 200399, 191212] in accordance with claim 1, **characterized in that** the percentages of pellet incorporation into the Hot Mix Asphalt can vary from 0.1% to 10% by weight (w/w) of the Hot Mix Asphalt.
